# EUROPEAN PATENT SPECIFICATION

(11) **EP 3 181 350 B1**
(45) Date of publication and mention of the grant of the patent: **12.09.2018**
(21) Application number: 15832047.3
(22) Date of filing: 01.07.2015
(51) Int. Cl.: B32B 15/02, A01K 63/00, A01K 75/00, B32B 15/08, C23C 26/00, B32B 7/12, B32B 15/082, B32B 15/18, B32B 27/08, B32B 27/20, B32B 27/30, B32B 27/32, B32B 27/36

(54) **ORGANISM-REPELLENT MULTILAYER RESIN-COATED METAL WIRE AND FISHING NET COMPRISING SAME**
ORGANISMUSABWEISENDER MEHRSCHICHTIGER HARZBESCHICHTETER METALLDRAHT UND FISCHNETZ DAMIT
FIL MÉTALLIQUE À REVÊTEMENT DE RÉSINE MULTICOUCHE RÉPULSIF CONTRE LES ORGANISMES ET FILET DE PÊCHE COMPRENANT CELUI-CI

(30) Priority: 12.08.2014 JP 2014164240
(43) Date of publication of application: 21.06.2017
(73) Proprietor: Towaron Co., Ltd., Sakai-shi, Osaka 592-8331 (JP); Nippon Steel & Sumitomo Metal Corporation, Tokyo 100-8071 (JP)
(72) Inventor: FUJIMOTO, Kunizo, Sakai-shi Osaka 592-8331 (JP); OHASHI, Shouichi, Tokyo 100-8071 (JP); SUGIMARU Satoshi, Tokyo 100-8071 (JP)
(74) Representative: Grünecker Patent- und Rechtsanwälte PartG mbB
(86) International application number: PCT/JP2015/068979
(87) International publication number: WO 2016/024448

(56) References cited:
- JP-A- H0 380 036
- JP-A- S6 094 046
- JP-A- H05 306 435
- JP-A- S63 137 629
- JP-A- S63 230 771
- JP-A- S63 231 931
- JP-A- 2009 011 242
- JP-A- 2012 187 851
- JP-A- 2014 132 887
- JP-B1- 5 465 805
- JP-B2- 3 160 681
- JP-U- H0 580 260

## Description

### TECHNICAL FIELD

The present invention relates to a wire material for use in a fishing net or the like to be used in the sea, such as a fish preserve for aquaculture or a fixed net, and a net material using the same.

### BACKGROUND ART

Aquaculture of fish may be carried out in a tank, or alternatively, may be carried out in the sea by enclosing an area with a fish preserve, which is an enclosure made of mesh or the like. Since the fish preserve is damaged not only by fish which are being cultured therein, but also by outside fish, such as sharks, which feed on the cultured fish, or worn due to the influence of waves and tides, it is required that a highly durable material be used for forming the fish preserve. Further, sessile organisms such as acorn barnacles or seaweeds may attach to the fish preserve, resulting not only in fouling, but also in clogging of the mesh of the fish preserve. This in turn may lead to the deterioration of water quality or a decrease in oxygen concentration within the fish preserve, or the deterioration of the fish preserve itself. Therefore, the fish preserve is required to have organism repellency, to the extent that the fish being cultured are not adversely affected.

Conventionally, a zinc-plated wire mesh has often been used in the fish preserve. However, since the fish preserve suffers physical corrosion due to waves and tides as well as chemical corrosion due to sea water, the protection of the wire mesh by a simple plating layer is often insufficient to prevent corrosion. Consequently, in many cases, the plating layer is damaged and the corrosion extends to the core wire, thereby reducing the service life of the fish preserve to one year to less than two years. In order to deal with the problem, an effort has been made to increase the plating thickness, so that the anticorrosion performance can be improved. However, an increase in the thickness of zinc plating results in making zinc itself more susceptible to dissolution into sea water. Accordingly, while a repellent effect against seaweeds and the like can be provided, there is a potential risk of adversely affecting the fish being cultured.

On the other hand, a fishing net in which a synthetic fiber is used as a material and which does not include a metal core wire is not corroded by salt in the sea water. However, the fishing net is susceptible to the effect of waves due to being lightweight, and there is a risk of being torn by foreign enemies such as globefish. Further, there is a problem that significant amount of seaweeds and the like attaches to the fishing net, when used as it is, because of insufficient organism repellency. In view of this, it has been investigated to impregnate a synthetic fiber, which is a raw material of the fishing net, with a repellent. However, a considerably large amount of the repellent is required for impregnating the entire fiber, and thus the toxicity of the repellent becomes unignorable.

In order to solve these problems, a fishing net composed of a resin-coated wire obtained by coating a metal core wire with a resin has been investigated. For example, the below identified Patent Document 1 discloses an antifouling wire material for use in a fish preserve for aquaculture, in which a copper wire is exposed at the outer periphery of a coating layer of a synthetic resin-coated iron wire. In the resin-coated wire, the corrosion of the iron wire as a core wire can be prevented by coating the iron wire with a synthetic resin. At the same time, organism repellency is exhibited due to the gradual dissolution of copper ions from the copper wire which is directly exposed to the sea water at the surface of the resin-coated wire.

Further, the below identified Patent Document 2 proposes an anti-attachment agent for preventing the attachment of aquatic organisms, which is obtained by mixing a polyamide resin such as Nylon or a thermoplastic resin such as a polyurethane resin with a powder of a metal compound such as silver, copper, nickel, and/or tin. In Examples (9 to 20) in Patent Document 2, a technique has been proposed in which such an anti-attachment agent for preventing the attachment of aquatic organisms is further coated on top of an iron wire coated with a polyolefin resin.

In addition to those mentioned above, a resin-coated iron wire in which an ionomer resin is used as a resin for coating of the surface of the wire has been proposed, as a wire material for use in a net material, such as a fence, which has an excellent durability on the ground (see the below-identified Non-patent Document 1).

### PRIOR ART DOCUMENTS

### PATENT DOCUMENTS

Patent Document 1: JP 2-299527 A
Patent Document 2: JP 63-137629 A

### NON-PATENT DOCUMENT

Non-patent Document 1: Public Works Research Center (a foundational juridical person), Report of Construction Technology Review and Certification, Coated Iron Wire for Iron Wire Cage-type Revetment "IR-coated iron wire"

### SUMMARY OF THE INVENTION

### PROBLEMS TO BE SOLVED BY THE INVENTION

However, when a copper wire is directly exposed to seawater as in the case of the resin-coated wire disclosed in Patent Document 1, it is assumed that the adverse effects on organisms may be unignorable, due to too large an amount of copper dissolution. Further, since a resin coating layer having an increased wall thickness is required in order to hold the entire copper wire, the amount of required raw material is inefficiently increased, and the volume of the resin-coated wire is increased more than necessary. In addition, since the copper wire is planted in the resin layer, there is a risk that a protective effect, which is the original purpose for which the coating of the resin-coated wire is provided, may be impaired. If a portion of the coating is damaged, sea water enters via the damaged portion to cause corrosion of the core wire, resulting in a failure to maintain the strength of the resin-coated wire.

On the other hand, since the coating arrangement disclosed in Patent Document 2 allows for reducing the amount of metal compound to be incorporated into the resin, it is thought that the adverse effects on the organisms to be cultured are considerably reduced as compared to the resin-coated wire disclosed in Patent Document 1. However, with the coating arrangement disclosed in Patent Document 2, the resulting coating layer not only has an increased thickness and requires an inefficiently increased amount of raw material, but also contains foreign substances. As a result, the coating layer has a reduced durability, becomes more susceptible to damage, and eventually loses its anticorrosion performance. Therefore, the risk of being damaged is unignorable, as with the resin-coated wire of Patent Document 1. Since the corrosion in the iron wire proceeds rapidly when the polyolefin resin layer covering the iron wire is damaged, it is thought that the coating arrangement proposed in Patent Document 2 may have a problem in durability when it is damaged.

There are several methods for producing a resin-coated wire. In the case of producing a resin-coated wire in which a photo-curable resin is used, a high-priced production apparatus as well as high technical skills for the introduction thereof are required.

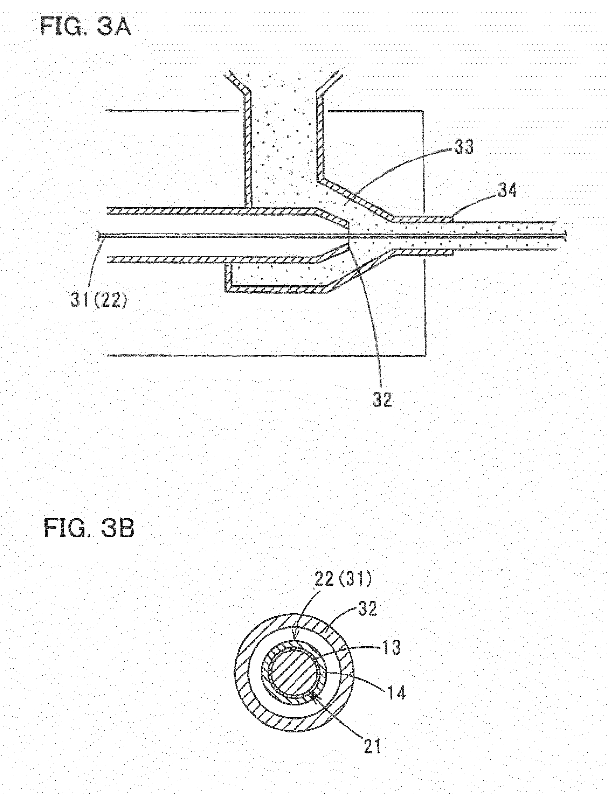

On the other hand, in the case of using a coating method in which a resin dissolved in a solvent is coated on a wire, there has been a problem that a baking finish cannot be performed on the production line, since the evaporation of the solvent takes too much time. Further, in the case of using a method in which a hot melt (thermoplastic adhesive resin) is melted by heat, and coated on a wire manually, the occurrence of bias has been inevitable. Accordingly, it is a common practice to use an extruder, in terms of production speed, as well. The extruder is an apparatus in which, as shown in FIG. 3A, for example, a core wire 31 is coated with a melted resin 33 filled around a nipple 32, as the core wire 31 is passed through the nipple 32, to be extruded through a head 34. However, the minimum core wire diameter of wire materials for nets, of the wires listed in Table 9 in JIS G 3543, is about 1.8 mm. In cases where such a wire material is subjected to extrusion coating, the resulting coating layer usually has a wall thickness of from 200 to 300 µm, as described in the above mentioned JIS. When copper or the metal compound as described above is incorporated into the thus obtained coating layer, the amount of metal which is not exposed to the surface and thus does not function effectively is excessively increased, resulting in a uselessly thick coating layer.

Accordingly, an object of the present invention is to provide a general purpose wire material which has durability against tides and waves, or against physical damage due to animal-related causes, in which corrosion due to salt is reduced, and in which adverse effects on necessary organisms are minimized, in a most efficient possible way.

### MEANS FOR SOLVING THE PROBLEMS

The present invention has solved the above mentioned problems by a multilayer resin-coated metal wire comprising: a resin-coated wire; and an ion-releasing layer provided on the surface of the resin-coated wire; wherein the resin-coated wire is obtained by coating a metal wire with a protective layer including an ionomer resin, with an adhesive layer interposed therebetween; and wherein the ion-releasing layer includes a resin-metal mixed material obtained by mixing a metal element-containing powder made of a metal or a metal compound capable of releasing metal ions which exhibit organism repellency, with a resin.

In the multilayer resin-coated metal wire as described above, since the protective layer including an ionomer resin, which has a high durability by itself, is coated on the metal wire, not singly and directly on the wire but with an adhesive layer interposed therebetween, there is hardly any risk of occurrence of separation due to complete adhesion. Further, the ionomer resin is a resin which can be used singly as an adhesive agent, and thus firmly adheres to the resin constituting the ion-releasing layer.

It is preferred that the metal to be included in the metal element-containing powder contained in the ion-releasing layer be, specifically, a transition metal such as copper, zinc, or silver. The metal ions of these metal elements are allowed to dissolve in water so that their antibacterial action or organism repellency is exhibited.

At the same time, it is preferred that the above mentioned metal wire be a metal wire material having a required strength depending on the application, and basically be a core wire made of an iron-based material in terms of strength and cost. Further, in terms of anticorrosion performance, it is preferred that the metal wire be a plated wire including a plating layer for preventing corrosion, such as a zinc plating layer, on the surface of the core wire. Further, the core wire is more preferably a Type H iron wire. With this arrangement, it is possible to prevent the corrosion of the iron wire due to sacrificial protection provided by the zinc plating layer, while securing the strength of the core wire itself due to using a Type H iron wire.

The metal wire preferably contains 0.5% by mass or more and 2.0% by mass or less of Cr, because the corrosion resistance is further improved, making the metal wire less susceptible to corrosion. When Cr is contained in the above range, the metal wire exhibits a high corrosion resistance against the corrosion at the ends of the wire material which come in contact with the sea water.

The above mentioned ion-releasing layer is formed on the surface of the resin-coated wire, which has been covered by the protective layer. However, of all the particles of the metal element-containing powder contained in the ion-releasing layer, only the particles which are present close to the surface of the layer actually dissolve into the water and exhibit a repellent action. Therefore, an ion-releasing layer having a minimum required thickness will suffice.

Further, since the coating of the ion-releasing layer is carried out after the formation of the protective layer including an ionomer resin has completed, it is possible to form the ion-releasing layer having a minimum thickness. When the extrusion coating of the ion-releasing layer is carried out, the portion of the resin-coated wire which comes in contact with the nipple is the protective layer including an ionomer resin, and thus there is no risk that the plating is peeled off due to the plated wire coming into contact with the nipple. Accordingly, unnecessary play can be reduced to minimize the inner diameter of the nipple, thereby allowing for the formation of an extremely thin ion-releasing layer. The thus formed ion-releasing layer not only has a uniform thickness and is less likely to be ruptured, but also is capable of exhibiting a uniform repellent effect.

### EFFECT OF THE INVENTION

The multilayer resin-coated metal wire according to the present invention is capable of exhibiting a high durability and corrosion resistance, and it can be used in sea water for an extended period of time. When a fishing net obtained by weaving the multilayer resin-coated metal wires is used as a fish preserve or a fixed net, sessile organisms or seaweeds are less likely to attach to the fishing net, and the workload for maintenance can be significantly reduced.

### BRIEF DESCRIPTION OF THE DRAWINGS

FIG. 1 is a cross-sectional view of a multilayer resin-coated metal wire according to the present invention.
FIG. 2 is a schematic diagram of the multilayer resin-coated metal wire according to the present invention.
FIG. 3A is a schematic diagram showing a sectional side view of a coating apparatus for coating a resin on a core wire (metal wire).
FIG. 3B is a sectional front view of the coating apparatus shown in FIG. 3A, taken at a position in the vicinity of a nipple, when forming an ion-releasing layer on a resin-coated wire.
FIG. 4 is a diagram showing an example of a configuration of a net material obtained by weaving the multilayer resin-coated metal wires according to the present invention, as a wire material.
FIG. 5 is a diagram showing an example of a configuration of a net material according to the present invention, when the net material is used as a fish preserve to be immersed in the sea.
FIG. 6 shows SEM images of the multilayer resin-coated metal wire produced in Reference Example 1.
FIG. 7 shows SEM images of the multilayer resin-coated metal wire produced in Example 1.

### MODE FOR CARRYING OUT THE INVENTION

The multilayer resin-coated metal wire according to the present invention and a net material obtained by using the same will now be described below. The multilayer resin-coated metal wire to be used in the present invention includes a resin-coated wire, and an ion-releasing layer provided on the surface of the resin-coated wire. The above described resin-coated wire is obtained by coating a metal wire with a protective layer including an ionomer resin, with an adhesive layer interposed therebetween. Further, the above described ion-releasing layer includes a resin-metal mixed material obtained by mixing a metal element-containing powder composed of a metal or a metal compound capable of releasing metal ions which exhibit organism repellency, with a resin. In other words, the multilayer resin-coated metal wire includes at least two resin layers, which are: the protective layer coated around the metal wire with an adhesive layer interposed therebetween; and the ion-releasing layer formed on top of the protective layer.

The protective layer serves to protect the metal wire and to maintain the strength thereof, due to being made of a strong ionomer resin. The ion-releasing layer, on the other hand, can be formed as a thin layer, and contains particles of foreign substances, and thus, it is gradually damaged due to the effects of waves and tides. As the damage of the layer progresses, not only the particles of the metal element-containing powder present at the surface of the ion-releasing layer, but also those contained in the interior of the resin will be gradually exposed, and thus the metal ions which exhibit organism repellency can be gradually released. Accordingly, the multilayer resin-coated metal wire can be used as a material in which the original strength of the wire material can be maintained, while securing the organism repellency for an extended period of time.

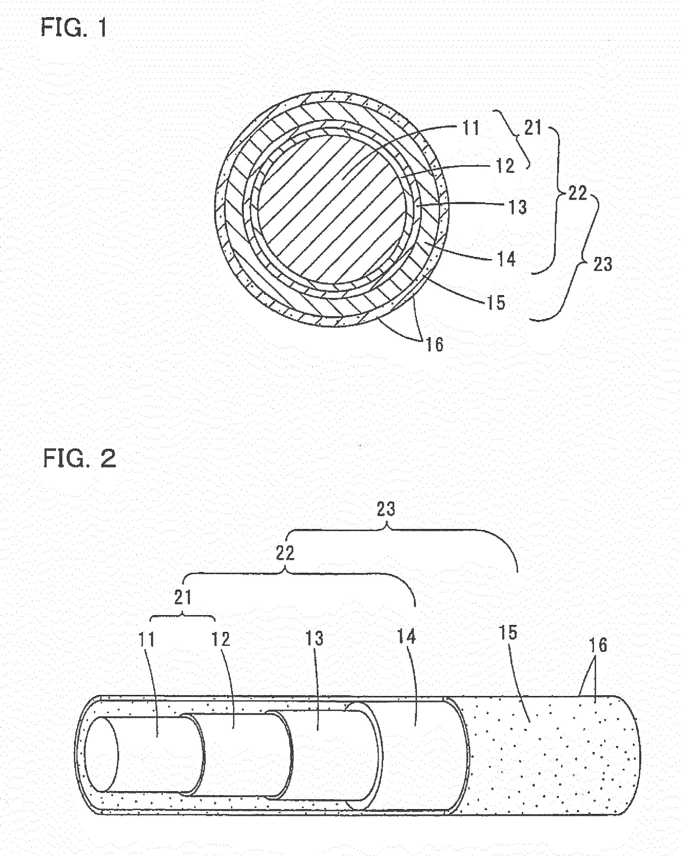

A specific example of an embodiment of a multilayer resin-coated metal wire 23 will be described with reference to FIG. 1 and FIG. 2. First, a plated wire 21 including an iron wire 11 as a core wire, and a plating layer 12 covering around the iron wire 11, is used as the metal wire.

The core wire of the metal wire is preferably the iron wire 11 made of an iron-based material containing more than 50% by mass of iron, in terms of durability, strength, and cost. In particular, the use of the iron wire 11 made of a so-called steel material allows the metal wire to exhibit a high strength, such that the wire cannot be easily bent by a power equivalent of a manpower or tidal wave power, and thus the shape of the wire can be easily maintained when forming a net material. Specifically, the steel material is an iron alloy having a relatively low carbon content, with a carbon concentration of 0.03% by mass or more and 1.0% by mass or less.

Further, the iron wire preferably contains a small amount of Cr, because the corrosion resistance against sea water can be further improved. Specifically, it is preferred that the Cr content in the iron wire be 0.5% by mass or more, and more preferably, 0.7% by mass or more. When the Cr content is less than 0.5% by mass, the improvement in the corrosion resistance due to incorporating Cr is hardly expected.

When the Cr content exceeds 2.0% by mass, on the other hand, the strength of the metal wire is increased excessively, resulting in a decrease in the workability in wire drawing, net making and the like. An addition of Cr in an even larger amount rather results in the deterioration of the corrosion resistance.

The influence of the addition of Cr as described above on the corrosion resistance, wire drawing workability and net making workability of bare metal wires without resin coating or plating were evaluated, and the results thereof are shown in Table 1. Each of the metal wires to be evaluated was drawn from a diameter of 5.5 mm to 3.2 mm by die drawing, and annealed, and the evaluation of the corrosion resistance was carried out based on the corrosion weight loss defined in JIS Z2371. The corrosion resistance was evaluated in comparison with a standard example to which no Cr was added, according to the following standards, and the results are shown in Table 1 with the corresponding symbols: one with the same degree of corrosion weight loss as the standard sample was evaluated as "Δ", one with a smaller corrosion weight loss and having an improved corrosion resistance was evaluated as "○", and one with a higher corrosion weight loss and having a decreased corrosion resistance was evaluated as "x". The workability was evaluated by performing a self-diameter winding test, and by observing the presence or absence of cracks on the surface layer of the metal wire. As a result, it has been found out that when the Cr content is 0.5% by mass or more and 2.0% by mass or less, both an improvement in the corrosion resistance due to addition of Cr, and the workability can be achieved at the same time.

**[Table 1]**

| Cr content in the metal wire (% by mass) | Evaluation of corrosion resistance | Evaluation of cracks by self-diameter winding test | Notes |
|---|---|---|---|
| No Cr added | Standard | Not observed | |
| 0.40 | Δ | Not observed | No improvement effect was obtained. |
| 0.52 | ○ | Not observed | Good |
| 0.98 | ○ | Not observed | Good |
| 1.44 | ○ | Not observed | Good |
| 1.85 | ○ | Not observed | Good |
| 1.94 | ○ | Not observed | Good |
| 2.12 | ○ | Observed | Added amount of Cr was too high, and resulted in deterioration of workability. |
| 2.38 | × | Observed | Added amount of Cr was too high, and defects such as cracks in the surface layer occurred during wire drawing. Cracks occurred during salt water spray test, and resulted in an extreme deterioration of internal pH, accelerated corrosion, and rather poorer corrosion resistance. |

The plating layer 12 is formed for the purpose of providing sacrificial protection to the iron wire 11. It is preferred that the plating layer 12 contain at least zinc in order to exhibit an anticorrosive effect on the material of the iron wire 11. Specific examples of the plating layer 12 include a layer of: zinc plating, zinc-aluminum alloy plating, and zinc-aluminum-magnesium alloy plating.

The diameter of the plated wire 21, including the iron wire 11 and the plating layer 12, is not particularly limited. For the purpose of use in a common net material, the plated wire 21 preferably has a diameter of 1.8 mm or more, more preferably 2.0 mm or more, and still more preferably 3.0 mm or more. When the core wire has a diameter of less than 2.0 mm, its strength is somewhat decreased even if it is coated by a resin. In this case, since it becomes difficult to maintain the shape of the resulting coated wire, the coated wire may not be reliably used in applications such as fixed nets and fish preserves.

A large diameter, on the other hand, poses no problem in terms of strength. However, since too large a diameter complicates the processing of the wire as a net material, the core wire preferably has a diameter of 7.0 mm or less, and more preferably 6.0 mm or less. Note, however, that the present invention may be used without any problem, depending on the application, even if the diameter falls outside the above range.

A protective layer 14 is further provided on the outer surface of the plated wire 21, and an adhesive layer 13 is provided between the plating layer 12 and the protective layer 14 so that the metal portion and the resin portion of the coated wire are bound together. Further, an ion-releasing layer 15 containing a metal-containing powder which exhibits organism repellency is provided around the protective layer 14.

The above described adhesive layer 13 is provided for the purpose of improving the anticorrosion performance and preventing the entry of water and air. The adhesive agent constituting the adhesive layer 13 is preferably a polyolefin-based adhesive agent, and particularly preferably a polyethylene-based adhesive agent, because of the high adhesion to the protective layer 14 including an ionomer resin. The thickness of the adhesive layer 13 is not particularly limited. When the adhesive layer 13 has a thickness of about 30 µm or more and 200 µm or less, practical problems are less likely to occur.

The resin constituting the protective layer 14 is mainly made of an ionomer resin. It is preferred that the ionomer resin accounts for at least 80% by mass or more of the resin constituting the protective layer 14. The ionomer resin is a resin having a structure in which molecules of ethylene-methacrylate copolymer or ethylene-acrylate copolymer are bound by intermolecular bonds via metal ions of sodium, zinc, and so on. The ionomer resin is characterized by having a moderate elasticity and flexibility while having a markedly high strength as compared to a common polyolefin resin, as well as having a better cold tolerance, wear resistance and stress cracking resistance as compared to polyolefin. While having the above described characteristics, the ionomer resin is plastically moldable almost in the same manner as with polyethylene, and the coating of the protective layer 14 on the core wire can be carried out by heating and melting the ionomer resin, followed by extrusion molding.

The protective layer 14 may be entirely made of the ionomer resin. However, the protective layer may contain an additive, excluding a foaming agent, to the extent that the effect of the resin-coated wire according to the invention is not impaired. The thickness of the protective layer 14 is preferably 100 µm or more, and more preferably 300 µm or more, and particularly preferably about 500 µm. When the thickness is less than 100 µm, the protective effect provided by the protective layer 14 may be insufficient, and there is a potential risk that the layer may be ruptured. On the other hand, a thickness exceeding 2,000 µm is not practical, and thus the thickness is preferably 1,000 µm or less.

Further, the ion-releasing layer 15 is provided on the surface of the protective layer 14. The ion-releasing layer 15 includes a resin-metal mixed material obtained by mixing a base resin, and a metal element-containing powder 16 made of a metal or a metal compound capable of releasing metal ions which exhibit organism repellency. Specific examples of the base resin include polyolefins such as polyethylene and polypropylene, and polyesters such as polyethylene terephthalate. In particular, when LLDPE (Linear Low Density Polyethylene) which is flexible and susceptible to damage is used as the base resin, the ion-releasing layer is moderately damaged to allow the particles of the metal element-containing powder contained in the layer to be gradually exposed. As a result, not only the particles of the metal element-containing powder 16 which are originally exposed at the surface of the ion-releasing layer 15, but also all the particles contained inside the layer become available to be released into the water as ions, thereby achieving the release of metal ions for an extended period of time.

Examples of the metal element contained in the metal element-containing powder 16 include transition metal elements such as copper, zinc, and so on. The ions of these metal elements which are liberated and present in the water exhibit a repellent effect which prevents the adhesion and the proliferation of organisms such as sessile organisms and seaweeds. Examples of the metal element-containing powder 16 which more easily releases metal ions include powders of copper zinc alloys such as cuprous oxide and brass, in addition to a powder of metallic copper.

The metal element-containing powder 16 preferably has an average particle size of 1 µm or more. Too small an average particle size results in too rapid a dissolution, thereby making the repellent effect less likely to be sustained for an extended period of time. At the same time, the average diameter is preferably 10 µm or less. This is because, when the average particle size is too large, the metal element-containing powder 16 becomes less prone to dissolution, not only resulting in insufficient repellent effect, but also possibly causing the clogging of an extrusion die when the powder is mixed with the base resin to be formed into the ion-releasing layer 15.

The amount of the metal element-containing powder 16 to be contained in the ion-releasing layer 15 is preferably 3% by mass or more, more preferably 5% by mass or more, and still more preferably 7% by mass or more.

At the same time, the content of the metal element-containing powder 16 is preferably 25% by mass or less, more preferably 20% by mass or less, still more preferably 17% by mass or less, and even more preferably 15% or less, because too large a content complicates the coating of the ion-releasing layer 15. Further, too large a content of the metal element-containing powder 16 causes an excessive increase in the dissolved amount of copper and zinc into the water. This is not desirable in terms of the effects on the organism being cultured, in cases where the multilayer resin-coated metal wire according to the present invention is used as a fishing net or a fish preserve.

The resin-metal mixed material may contain another component to the extent that the function of the present invention is not impaired. However, the content thereof is preferably 3% by mass or less, and more preferably 2% by mass or less, because too large a content may cause unexpected effects.

The ion-releasing layer 15 preferably has a wall thickness of 50 µm or more, and more preferably 75 µm or more. When the wall thickness is less than 50 µm, the ion-releasing layer 15 is too thin and contains too little amount of the metal element-containing powder 16, and thus, there is a risk of resulting in too short a duration during which the organism repellent effect of the metal ions persists. Since a resin having a lower strength than that of the ionomer resin is used for forming the ion-releasing layer 15 of the multilayer resin-coated metal wire according to the present invention, the particles of the metal element-containing powder 16 embedded inside the layer gradually becomes available to be released, thereby allowing the repellent effect to be sustained for an extended period of time. However, if the layer is too thin, this effect will be weakened.

On the other hand, increasing the thickness of the ion-releasing layer to more than 200 µm merely results in the waste of the resin and the material, with no useful effects. In the multilayer resin-coated metal wire according to the present invention, in particular, since the ion-releasing layer 15 is formed after completing the formation of the protective layer 14, there is no risk that the plating is peeled off due to the plated wire 21 coming into contact with the nipple 32 of the extruder, when the ion-releasing layer 15 is formed by extrusion coating. Therefore, it is possible to adjust the inner diameter of the nipple 32 of the extruder which is used in the formation of the ion-releasing layer 15, such that the inner periphery of the nipple 32 is sufficiently close to the outer periphery of the protective layer 14. Specifically, the thickness of the ion-releasing layer 15 may be 150 µm or less, and it is preferably 100 µm or less, because a favorable balance between the thickness and the duration can be achieved.

In order to produce the multilayer resin-coated metal wire 23 according to the present invention, it is preferred that the plating layer 12 containing zinc be firstly formed on the iron wire 11, and then, for example, the adhesive layer 13 and the protective layer 14 be formed by an extrusion molding in which these layers are simultaneously coated by extrusion. Alternatively, the coating of the protective layer 14 may be carried out after completing the formation of the adhesive layer 13. By further forming the ion-releasing layer 15 on top of a resin-coated wire 22 in which the protective layer 14 has been formed by either of the above mentioned methods, using an extruder as exemplified in FIG. 3A, it is possible to obtain the multilayer resin-coated metal wire 23 including the ion-releasing layer 15 whose thickness has been suitably adjusted. Since the plated wire 21 is already under the protection of the protective layer 14 when it is subjected to the extrusion, it is possible to avoid the occurrence of manufacturing defects, such as peeling off of the plating due to the plated wire 21 coming into contact with the outer periphery of the nipple 32 of the extruder (FIG. 3B).

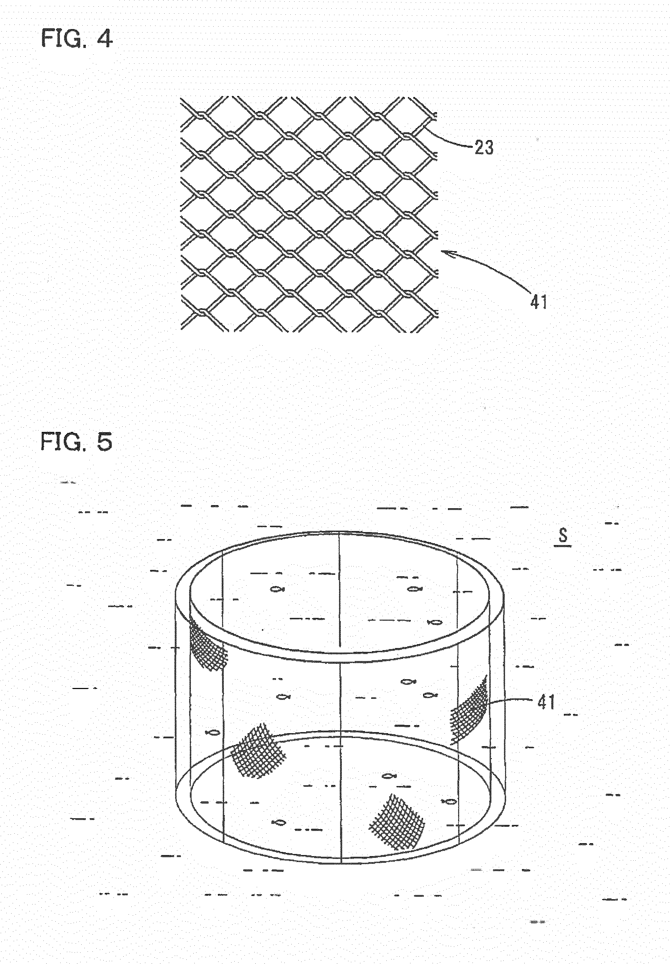

Since the multilayer resin-coated metal wire 23 according to the present invention includes the above described plated wire 21 as the core wire, it is possible to form a net material by crossing and weaving a plurality of the coated metal wires, for example, as shown in FIG. 4. Particularly in terms of strength as a wire mesh, it is preferred that a net material 41 be formed by weaving a plurality of the multilayer resin-coated metal wires 23. The net material as described above can be used as a net material which is used in a location where sessile organisms are likely to prevail, or where the attachment of organisms such as seaweeds which cause fouling could occur, so as to repel these organisms, prevent the attachment thereof, or prevent the fouling caused thereby.

Even if the surface of the ion-releasing layer 15 is damaged during the formation of the net material 41, there is no problem. Since the plated wire 21 is protected by the protective layer 14, a somewhat high pressure may be applied to the multilayer resin-coated metal wire 23 during the processing.

The net material 41 can be used, for example, as a net material to be immersed in sea water S. When the net material is used as the net material 41 which is immersed in the sea water over an extended period of time, such as the fish preserve shown in FIG. 5 or a fixed net, the attachment of sessile organisms such as acorn barnacles can be prevented, thereby avoiding the damage of the net material due to an increase in weight. Further, as the ion-releasing layer 15 is gradually damaged by being constantly affected by waves and tides, the surface area through which the particles of the metal element-containing powder 16 are exposed to the sea water gradually extends. This allows not only the particles of the metal element-containing powder 16 present on the surface of the ion-releasing layer 15 at the time of installation, but also those present in the interior of the layer 15, to sufficiently contribute to the organism repellency. In addition, the fouling of the net is less likely to occur even when it is used for an extended period of time, since the attachment of seaweeds or the like to the surface thereof is less likely to occur. Thus, particularly in the case of a fish preserve, it is possible to prevent a situation where the concentration of oxygen or planktons inside the fish preserve falls outside the expected range.

### EXAMPLES

### (Reference Example 1)

An example in which the multilayer resin-coated metal wire according to the present invention was actually prepared will be described below.

Himilan manufactured by Du Pont-Mitsui Polychemicals Co., Ltd. was used as an ionomer resin. As a base resin to be used for forming an ion-releasing layer, a thermoplastic resin (Nucrel, ethylene-methacrylic acid copolymer resin; manufactured by Du Pont Co., Ltd.) was used, as a hot melt adhesive resin. Further, as an adhesive agent to be used for forming an adhesive layer, a polyethylene adhesive agent was used. As a core wire, an iron wire having a diameter of 3.2 mm which had been subjected to hot-dip zinc coating was used.

First, the core wire was subjected to an extrusion molding to simultaneously form an adhesive layer with the adhesive resin and a protective layer with the melted ionomer resin, such that the total average thickness of the adhesive layer and the protective layer was 400 µm, thereby obtaining a resin-coated wire having a diameter of 4.0 mm.

Further,10 parts by mass (9.1% by mass) and 30 parts by mass (23% by mass) of a copper zinc alloy were each mixed with 100 parts by weight of the base resin to prepare resin-metal mixed materials of Reference Examples 1a and 1b, respectively. These resin-metal mixed materials were each coated on the outer periphery of the protective layer of the above obtained resin-coated wire having a diameter of 4.0 mm, such that an ion-releasing layer having a wall thickness of 100 µm was formed, thereby obtaining multilayer resin-coated metal wires (Reference Examples 1a and 1b) having a gold surface color.

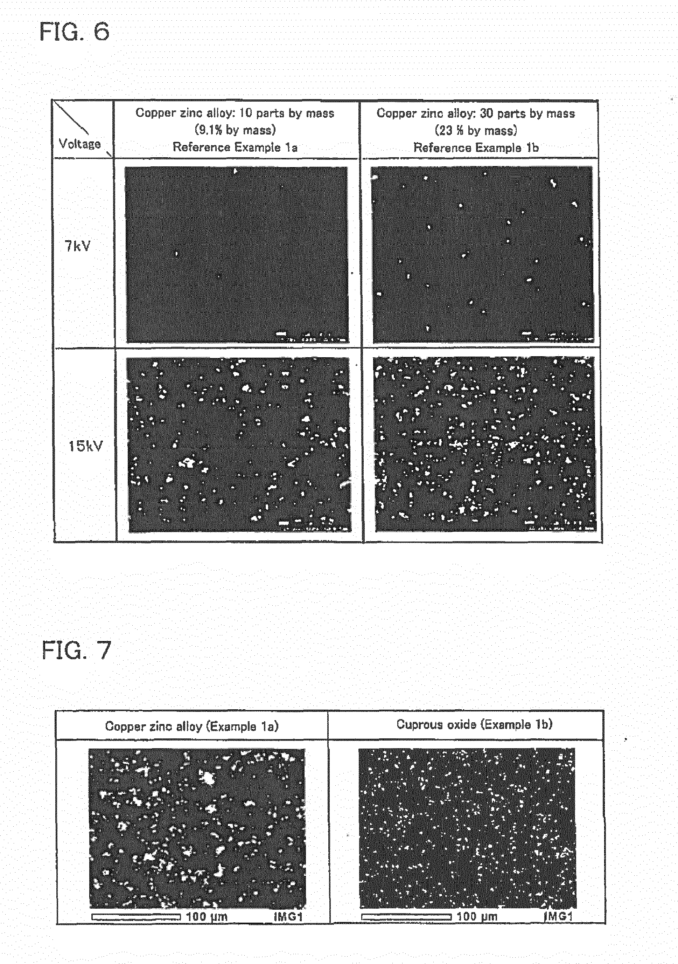

SEM images of the surfaces of the multilayer resin-coated metal wires, in each of which the ion-releasing layer had been provided on the resin-coated wire as described above, were captured with a scanning electron microscope at acceleration voltages of 7 kV and 15 kV. The results are shown in FIG. 6. In the SEM images taken at 7 kV, only the metal elements present close to the surface of the ion-releasing layer are detected, whereas in the SEM images taken at 15 kV, the metal elements contained in the interior of the layer are also detected, as in the results of the present Reference Examples. Although the amount of the metal elements detected on the surface of the multilayer resin-coated metal wire of Reference Example 1a is lower as compared to those of Reference Example 1b, it has been confirmed that a sufficient amount of metal elements were contained in the interior of the ion-releasing layer of the multilayer resin-coated metal wire of Reference Example 1a.

### (Example 1)

After preparing a resin-coated wire in the same manner as in Reference Example 1, the formation of an ion-releasing layer was carried out in a different manner, as follows.

First, LLDPE (melt flow rate: 30) was used as a base resin of the ion-releasing layer. Further, a metal element-containing powder containing a copper zinc alloy as it is (Example 1a) and a metal element-containing powder containing cuprous oxide (Cu₂O: 40 µm, retained on sieve: 0.01% or less) (Example 1b) were prepared. Subsequently, 79% by mass of the base resin, 20% by mass each of the respective metal clement-containing powders prepared above, and 1% by mass of a metal soap of a higher fatty acid salt were mixed to obtain resin-metal mixed materials of Examples 1a and 1b, respectively. Using each of the thus obtained resin-metal mixed materials, the ion-releasing layer was formed on the circumference of the resin-coated wire 22 by an extruder, such that the ion-releasing layer has a wall thickness of 75 µm.

In the above described manner, a multilayer resin-coated metal wire having a copper zinc alloy content of 20% by mass and a gold surface color (Example 1a), and a multilayer resin-coated metal wire having a cuprous oxide content of 20% by mass and a red surface color (Example 1b) were obtained. SEM images of the resulting multilayer resin-coated metal wires were taken at 15 kV, using the same scanning electron microscope as in Reference Example 1. The thus obtained images are shown in FIG. 7. It has been confirmed that the particles of copper derived from the copper zinc alloy or cuprous oxide are distributed throughout the entire ion-releasing layer, when including the particles present in the interior of the layer.

### <Dissolution test>

A piece of 38 g was cut out from each of the multilayer resin-coated metal wires of Examples 1a and 1b, and each piece was immersed in a sealable bottle filled with an artificial sea water. Each of the bottles was sealed and left to stand for one month. After one month, Cu concentration in the artificial sea water in which the multilayer resin-coated metal wire having the ion-releasing layer containing a copper zinc alloy had been immersed was 0.8 g/L, and Cu concentration in the artificial sea water in which the multilayer resin-coated metal wire having the ion-releasing layer containing cuprous oxide had been immersed was 0.75 g/L. This results revealed that the dissolved amount of Cu was slightly higher in the multilayer resin-coated metal wire having the ion-releasing layer containing a copper zinc alloy.

### DESCRIPTION OF SYMBOLS

- 11: iron wire
- 12: plating layer
- 13: adhesive layer
- 14: protective layer
- 15: ion-releasing layer
- 16: metal element-containing powder
- 21: plated wire
- 22: resin-coated wire
- 23: multilayer resin-coated metal wire
- 31: core wire
- 32: nipple
- 33: resin
- 34: head
- 41: net material
- S: sea

## Claims

1. A multilayer rcsin-coated metal wire comprising:
a resin-coated wire; and
an ion-releasing layer provided on a surface of the resin-coated wire;
wherein the resin-coated wire is obtained by coating a metal wire with a protective layer including an ionomer resin, with an adhesive layer interposed therebetween, and
wherein the ion-releasing layer includes a resin-metal mixed material obtained by mixing a metal clement-containing powder made of a metal or a metal compound capable of releasing metal ions which exhibit organism repellency, with a base resin which is a polyolefin or a polyester.

2. The multilayer resin-coated metal wire according to claim 1, wherein a percentage of the metal element-containing powder in the ion-releasing layer is 5% by mass or more and 25% by mass or less.

3. The multilayer resin-coated metal wire according to claim 1 or 2, wherein the metal element-containing powder is cuprous oxide or a copper zinc alloy.

4. The multilayer resin-coated metal wire according to any one of claims 1 to 3, wherein the metal wire comprises an iron wire containing 0.5% by mass or more and 2.0% by mass or less of Cr.

5. A fishing net comprising the multilayer resin-coated metal wire according to any one of claims 1 to 4.

## Patentansprüche

1. Mehrschichtiger harzbeschichteter Metalldraht umfassend:
einen harzbeschichteten Draht; und
eine ionenfreisetzende Schicht, die auf einer Oberfläche des harzbeschichteten Drahts bereitgestellt ist;
wobei der harzbeschichtete Draht durch Beschichten eines Metalldrahts mit einer Schutzschicht, die ein lonomerharz einschließt, mit einer dazwischen eingefügten Klebstoffschicht, erhalten wird, und
wobei die ionenfreisetzende Schicht ein Harz-Metall-Mischmaterial einschließt, das durch Mischen eines ein Metallelement enthaltenden Pulvers, das aus einem Metall oder einer Metallverbindung gefertigt ist, das im Stande ist Metallionen freizusetzen, welche eine Organismen abweisende Wirkung aufweisen, mit einem Grundharz erhalten wird, welches ein Polyolefin oder ein Polyester ist.

2. Mehrschichtiger harzbeschichteter Metalldraht gemäß Anspruch 1, wobei ein Prozentsatz des ein Metallelement enthaltenden Pulvers in der ionenfreisetzenden Schicht 5 Massenprozent oder mehr und 25 Massenprozent oder weniger beträgt.

3. Mehrschichtiger harzbeschichteter Metalldraht gemäß Anspruch 1 oder 2, wobei das ein Metallelement enthaltende Pulver Kupfer(I)-oxid oder eine Kupfer-Zink-Legierung ist.

4. Mehrschichtiger harzbeschichteter Metalldraht gemäß einem der Ansprüche 1 bis 3, wobei der Metalldraht einen Eisendraht umfasst, der 0,5 Massenprozent oder mehr und 2,0 Massenprozent oder weniger Cr enthält.

5. Fischnetz umfassend den mehrschichtigen harzbeschichteten Metalldraht gemäß einem der Ansprüche 1 bis 4.

## Revendications

1. Fil métallique à revêtement de résine multicouche comprenant :
un fil recouvert de résine, et
une couche de libération d'ions prévue sur la surface du fil recouvert de résine,
dans lequel le fil recouvert de résine est obtenu en déposant une couche protectrice incluant une résine ionomère sur un fil métallique, une couche adhésive étant intercalée entre ceux-ci, et
dans lequel la couche de libération d'ions inclut un matériau mixte résine - métal obtenu en mélangeant une poudre contenant un élément métallique constituée d'un métal ou d'un composé métallique pouvant libérer des ions métalliques qui présentent un pouvoir de répulsion aux organismes, avec une résine de base qui est une polyoléfine ou un polyester.

2. Fil métallique à revêtement de résine multicouche selon la revendication 1, dans lequel le pourcentage de la poudre contenant un élément métallique dans la couche de libération d'ions est de 5 % ou plus en masse et de 25 % ou moins en masse.

3. Fil métallique à revêtement de résine multicouche selon la revendication 1 ou la revendication 2, dans lequel la poudre contenant un élément métallique est un oxyde cuivreux ou un alliage cuivre zinc.

4. Fil métallique à revêtement de résine multicouche selon l'une quelconque des revendications 1 à 3, dans lequel le fil métallique comprend un fil de fer contenant 0,5 % ou plus en masse et 2,0 % ou moins en masse de Cr.

5. Filet de pêche comprenant le fil métallique à revêtement de résine multicouche conforme à l'une quelconque des revendications 1 à 4.
